(19) Europäisches Patentamt
European Patent Office
Office européen des brevets

(11) EP 4 721 842 A1

(12) EUROPEAN PATENT APPLICATION

(43) Date of publication:
08.04.2026 Bulletin 2026/15

(21) Application number: 25206067.8

(22) Date of filing: 01.10.2025

(51) International Patent Classification (IPC):
B01D 53/22 (2006.01)    B01D 53/26 (2006.01)
C01B 32/50 (2017.01)

(52) Cooperative Patent Classification (CPC):
B01D 53/268; B01D 53/229; C01B 32/50;
B01D 2256/22; B01D 2257/80; B01D 2258/0275

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 01.10.2024 US 202463702123 P

(71) Applicant: Haffmans B.V.
5928 PW Venlo (NL)

(72) Inventors:
• ROODBEEN, J.E.
  Venlo (NL)
• BANOS, Konstantinos
  Athens (GR)
• VAN ESSEN, Machiel
  Geldrop (NL)
• TINOCO, Rodrigo Rivera
  Venlo (NL)

(74) Representative: Viering, Jentschura & Partner mbB
Patent- und Rechtsanwälte
Am Brauhaus 8
01099 Dresden (DE)

(54) **MEMBRANE-BASED PROCESS GAS DRYING WITH LOW PRESSURE GASEOUS STREAMS SYSTEM AND METHOD**

(57) A system and a method for separating water from a gas mixture comprising carbon dioxide and water is provided. The system includes a source of a carbon dioxide-containing gas mixture, wherein the carbon dioxide-containing gas mixture comprises at least about 1 ppm by volume water vapor and a process gas drying unit comprising a membrane in fluid communication with the source of the carbon dioxide-containing gas mixture, the process gas drying unit designed to separate the water vapor from the carbon dioxide-containing gas mixture to generate a dehydrated gas from the carbon dioxide-containing gas mixture.

FIG. 1

EP 4 721 842 A1

**Description**

CROSS-REFERENCE TO RELATED APPLICATIONS

This application claims priority under 35 U.S.C. § 119 to U.S. Provisional Application No. 63/702,123, entitled "MEMBRANE-BASED PROCESS GAS DRYING WITH LOW PRESSURE GASEOUS STREAMS SYSTEM AND METHOD," the entirety of which is hereby incorporated by reference.

FIELD OF DISCLOSURE

The present disclosure relates generally to a system for separating water from a carbon dioxide-containing gas mixture to produce a dehydrated carbon dioxide-containing gas mixture and liquifying the dehydrated carbon dioxide-containing gas mixture to produce liquified carbon dioxide product, the system comprising a membrane-based unit for drying the carbon dioxide-containing gas mixture or other process gases.

BACKGROUND

Polymeric gas separation membranes are well known and commonly used in industry to purify, upgrade, and/or remove a selected component from gas mixtures. In particular, polymeric gas separation membranes have been used in various industries for air drying. Membrane air dryers are used in industries that utilize compressed air, as compressed air generally needs to be dry. The membrane of a membrane air dryer functions by allowing water to pass through the membrane while retaining the compressed air. The water that passes through the membrane may be swept away by a purge gas, such as air, and exhausted to the atmosphere as a humid gas stream (e.g., a humid air stream). Though membrane air drying has been a valuable technology for industries that require compressed air, there are other industries that may benefit from gas separation membrane technology to separate water from gases or gas mixtures other than air.

Many industries, from power plants to breweries, are focused on reducing their carbon footprint by recovering or capturing carbon dioxide gas that their industrial processes generate. For example, during the process of producing fermented beverages, such as the brewing of beer and the like, a considerable amount of carbon dioxide is generated during fermentation. At the same time, carbon dioxide is an important component of preparing fermented beverages, such as beer. In beer production, carbon dioxide may be both a processing aid (e.g., used to fill brewed beer into containers and/or to rinse out piping) and an ingredient in the beer (used to carbonate the beer). Breweries and producers of other fermented beverages have traditionally purchased the carbon dioxide used in their production process, where the carbon dioxide was typically chemically produced (e.g., by burning natural gas or other fuel) rather than naturally derived. Thus, recovering the carbon dioxide generated during fermentation, rather than blowing the carbon dioxide off and/or releasing the carbon dioxide as a waste stream, and utilizing the carbon dioxide elsewhere in the production process may potentially reduce the carbon footprint of the entire process. The carbon dioxide generated during fermentation may alternatively or additionally be collected, optionally purified, and utilized for producing carbonated (soft) drinks or processed to yield a purified liquid, solid, and/or gaseous carbon dioxide product, thereby providing additional commercially useful products.

Systems for carbon dioxide recovery are known. For example, reducing greenhouse gas emissions in fossil-fuel power plants via post-combustion capture of $CO_2$, where $CO_2$ is separated from flue gases before the flue gases are discharged into the atmosphere, is known. In the brewing industry, systems that capture carbon dioxide-containing gas mixtures generated during fermentation and remove air, foam, water, and/or impurities, such as organic and sulfurous components produced during the fermentation process, from the carbon dioxide-containing gas mixture to produce purified, even food-grade, carbon dioxide are known.

However, existing systems for recovering carbon dioxide may involve additional complexity, including additional steps and/or additional equipment. There remains a need for improvements to existing processes and systems for recovering and/or purifying carbon dioxide that is generated, without adding complexity to the processes and systems.

SUMMARY

The systems of the present disclosure, using an improved process and superior process controls, produce purified and/or liquefied carbon dioxide from a gas mixture containing carbon dioxide at an industrial scale, in an efficient and cost-effective manner.

A system for separating a gas mixture is provided. The system includes a source of a carbon dioxide-containing gas mixture, where the carbon dioxide-containing gas mixture includes at least about 1 ppm by volume water vapor. The system also includes a process gas drying unit comprising a membrane in fluid communication with the source of the carbon dioxide-containing gas mixture. The process gas drying unit is designed to separate the water vapor from the carbon dioxide-containing gas mixture to generate a dehydrated gas from the carbon dioxide-containing gas mixture.

In some instances, the system further includes a carbon dioxide recovery unit having a liquefaction unit designed to produce liquefied carbon dioxide. In other instances, the carbon dioxide recovery unit includes a compressor unit designed to produce supercritical carbon dioxide. In some such instances, the liquefaction unit includes at least one of a condenser, a stripper, and a reboiler.

In some instances, the system further includes a carbon dioxide recovery unit designed to generate a purified liquid carbon dioxide product and an off-gas, in which the off-gas is provided to the process gas drying unit as a sweep stream.

In other instances, the carbon dioxide-containing gas mixture includes at least about 100 ppm by volume carbon dioxide.

In some instances, the system further includes a carbon dioxide recovery unit in fluid communication with the process gas drying unit, a valve in fluid communication with the process gas drying unit, a measuring device that is designed to measure a parameter of the dehydrated gas to determine a measured value, and a controller in electrical communication with the valve and the measuring device. The controller is designed to maintain or adjust a position of the valve in response to the measured value.

In other instances, the parameter is selected from the group consisting of a pressure value, a temperature value, a flow rate, a composition value, a viscosity value, a humidity value, a moisture content value, a dewpoint value, a density value, and combinations thereof.

In some instances, the dehydrated gas is imparted with a dewpoint of no more than -20°C to no less than -75°C.

In other instances, the system further includes a foam separator designed to receive the carbon dioxide-containing gas mixture and a foam trap in fluid communication with the foam separator and the process gas drying unit. In some such instances, the foam separator and the foam trap are designed to provide a substantially foam-free fermentation gas mixture. In other such instances, the foam separator and the foam trap are designed to provide a foam-free fermentation gas mixture.

In some instances, the system further includes at least one gas transport device in fluid communication with the process gas drying unit, in which the at least one gas transport device is provided upstream of the process gas drying unit.

In other instances, the dehydrated gas includes less than 10 ppm water by volume.

In another aspect, a system for separating water vapor from a gas stream is provided. The system includes a fermentation gas stream comprising a carbon dioxide-containing gas mixture imparted with a first concentration of water in which the carbon dioxide-containing gas mixture includes at least about 50% by weight carbon dioxide. The system also includes a gas separation module comprising a membrane. The gas separation module is in fluid communication with the fermentation gas stream and the membrane is designed to produce a permeate stream and a retentate stream from the fermentation gas stream. The retentate stream provided from the gas separation module is a dehydrated gas stream imparted with a second concentration of water that is less than the first concentration of water.

In some instances, the membrane of the gas separation module is imparted with a $H_2O/CO_2$ selectivity of about 1 to about 200.

In other instances, the system further includes a sweep stream line in fluid communication with the retentate stream and a permeate side of the membrane, a valve in fluid communication with the sweep stream line, and a controller in electrical communication with the valve. In some instances, the controller is designed to adjust the valve to provide at least a portion of the retentate stream to the permeate side of the membrane.

In some instances, the system further includes a carbon dioxide recovery unit having a liquefaction unit, in which the carbon dioxide recovery unit is designed to produce a carbon dioxide product stream and an off-gas. The system also includes a first sweep stream line in fluid communication with the retentate stream and a permeate side of the membrane, and the first sweep stream line designed to provide at least a first portion of the retentate stream to the permeate side of the membrane as a sweep gas. The system further includes a second sweep stream line in fluid communication with the permeate side of the membrane, in which the second sweep stream line is designed to provide at least a second portion of the off-gas to the permeate side of the membrane.

In yet another aspect, a method for separating a gas mixture is provided, the method including providing a gas mixture comprising carbon dioxide and water from a fermentation process, feeding the gas mixture to a membrane dryer, removing water from the gas mixture, and forming a dehydrated gas stream. The dehydrated gas stream is imparted with a dewpoint of no more than -20°C. In some cases, the method may be utilized with any of the systems for separating a gas mixture or systems for separating water vapor from a gas stream described above.

In some instances, the method further includes providing the dehydrated gas stream to a liquefaction unit that generates a purified liquid carbon dioxide product and an off-gas. In some such instances, the method also includes providing the off-gas to the membrane dryer as a sweep gas.

In other instances, the fermentation process that creates the gas mixture produces a food product selected from the group consisting of beer, wine, distilled spirits, ciders, and sparkling sodas.

In some instances, the gas mixture includes carbon dioxide in an amount of at least about 50% by weight.

DESCRIPTION OF THE DRAWINGS

FIG. 1 is a block diagram of an example carbon dioxide recovery system including a membrane dryer and a carbon dioxide liquefaction unit, in which the carbon dioxide recovery unit can be configured to produce purified carbon dioxide from a low-purity carbon dioxide-containing fermentation gas in accordance with the teachings of the present disclosure;

FIG. 2 is a block diagram of an example configuration of the carbon dioxide liquefaction unit of FIG. 1;

FIG. 3 is a block diagram of an example configuration of a plurality of membranes within the membrane dryer of FIG. 1; and

FIG. 4 is a block diagram of an example system for producing fermented beverages that includes the carbon dioxide recovery system of FIG. 1.

While the disclosure is susceptible to various modifications and alternative forms, a specific embodiment thereof is shown by way of example in the drawings and will herein be described in detail. It should be understood, however, that the drawings and detailed description presented herein are not intended to limit the disclosure to the particular embodiment disclosed, but to the contrary, the intention is to cover all modifications, equivalents, and alternatives falling within the spirit and scope of the present disclosure as defined by the appended claims.

DETAILED DESCRIPTION

Before any instances of the invention are explained in detail, it is to be understood that the invention is not limited in its application to the details of construction and the arrangement of components set forth in the following description or illustrated in the following drawings. The invention is capable of other instances and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The numerical ranges disclosed herein include all values from, and including, the lower and upper values. For ranges containing explicit values (e.g., a range from 1, or 2, or 3 to 5, or 6, or 7), any subrange between any two explicit values is included (e.g., the range 1-7 above includes subranges 1 to 2; 2 to 6; 5 to 7; 3 to 7; 5 to 6; etc.).

It is understood that the sum of the components in each of the mixtures, compositions, streams, lines, and products disclosed herein yields 100 mole percent.

It is understood that the relative amount of gas streams compared to each other encompasses any percent composition used in the art, including, by way of non-limiting example, percent by weight (% $w_1/w_2$), percent by mass (% $m_1/m_2$), percent by volume (% normalized $v_1/v_2$), percent by moles (% $n_1/n_2$), and percent by concentration (e.g., % $M_1/M_2$, % $m_1/m_2$). It is further understood that the subscripts "1" and "2" can refer to any gas stream or component within the system.

The term "line" refers to a physical connection between two points. Nonlimiting examples of suitable lines include tubes and pipes. The term "stream" refers to the composition, mixture, or component, contained within and/or passing through a line. It is understood that the terms "line" and "stream" may be used interchangeably herein, such that, for example, the feed line may be referred to herein as the feed stream (and vice versa).

The following discussion is presented to enable a person skilled in the art to make and use instances of the disclosure. Various modifications to the illustrated instances will be readily apparent to those skilled in the art, and the generic principles herein can be applied to other instances and applications without departing from instances of the disclosure. Thus, instances of the disclosure are not intended to be to instances shown, but are to be accorded the widest scope consistent with the principles and features disclosed herein. The following detailed description is to be read with reference to the figures, in which like elements in different figures have like reference numerals. The figures, which are not necessarily to scale, depict selected instances and are not intended to limit the scope of instances of the disclosure. Skilled artisans will recognize the examples provided herein have many useful alternatives and fall within the scope of instances of the disclosure.

Additionally, while the following discussion may describe features associated with specific devices or instances, it is understood that additional devices and/or features can be used with the described systems and methods, and that the discussed devices and features are used to provide examples of possible instances, without being limited.

As discussed above, various industries, from power plants to breweries, generate carbon dioxide-containing gas mixtures. These industries are often interested in reducing their carbon footprint by recovering or capturing the carbon dioxide from the carbon dioxide-containing gas mixtures that they generate. For example, reducing greenhouse gas emissions in fossil-fuel power plants can be achieved via post-combustion capture of $CO_2$, where $CO_2$ is separated from flue gases before the flue gases are discharged to the atmosphere. In the brewing industry, systems can be used to capture carbon dioxide-containing gas mixtures generated during fermentation and remove air, foam, water, and/or impurities, such as organic and sulfurous components produced during the fermentation process, from the carbon dioxide-containing gas mixture to produce purified, even food-grade, carbon dioxide.

The composition and/or carbon dioxide content of the carbon dioxide-containing gas mixtures produced by the various industries may vary depending on the underlying industrial process. In some instances, the carbon dioxide-containing gas mixture comprises water (e.g., water vapor) and at least about 0.01% by weight carbon dioxide, or at least about 0.1% by weight carbon dioxide, or at least about 1% by weight carbon dioxide, or at least about 5% by weight carbon dioxide, or at least about 10% by weight carbon dioxide, or at least about 20% by weight carbon dioxide, or at least about 30% by weight carbon dioxide, or at least about 40% by weight carbon dioxide, or at least about 50% by weight carbon dioxide. In some aspects, the gas mixture comprises at least about 50% by weight of carbon dioxide and water vapor. In certain instances, the carbon dioxide-containing gas mixture comprises water (e.g., water vapor) and carbon dioxide in an amount of at least about 0.01% by weight, or at least about 0.1% by weight, or at least about 1% by weight, or at least about 5% by weight, or at least about 10% by weight, or at least about 20% by weight, or at least about 30% by weight, or at least about 40% by weight, or at least about 50% by weight. In some instances, the gas mixture may comprise water (e.g., water vapor) and greater than 50% by weight carbon dioxide. In some cases, the gas mixture may comprise water (e.g., water vapor) and carbon dioxide in an amount of greater than 50% by weight. The gas mixture may comprise a majority of carbon dioxide. In some aspects, the gas mixture comprises at least about 1 ppm by volume of water (e.g., water vapor).

## Systems for Preparing Fermented Beverages

Fermentation is a process used to produce multiple food products, including beer, wine, distilled spirits, ciders, sparkling sodas, and other beverages. During the fermentation process, microorganisms, such as yeast, convert sugars to (1) alcohol or organic acids and (2) carbon dioxide. Generally, in beer brewing, winemaking, and the like, the fermentation process generates a considerable amount of carbon dioxide. At the same time, carbon dioxide is an important component of preparing fermented beverages, such as beer. In beer production, carbon dioxide may be both a processing aid (e.g., used to fill brewed beer into containers and/or to rinse out piping) and an ingredient in the beer (used to carbonate the beer). Thus, recovering the carbon dioxide generated during fermentation, rather than blowing the carbon dioxide off and/or releasing the carbon dioxide as a waste stream, and utilizing the carbon dioxide elsewhere in the production process, may reduce the carbon footprint of the entire process. The carbon dioxide generated during fermentation may alternatively or additionally be collected, optionally purified, and utilized for producing carbonated (soft) drinks or processed to yield a purified liquid, solid, and/or gaseous carbon dioxide product, thereby providing additional commercially useful products.

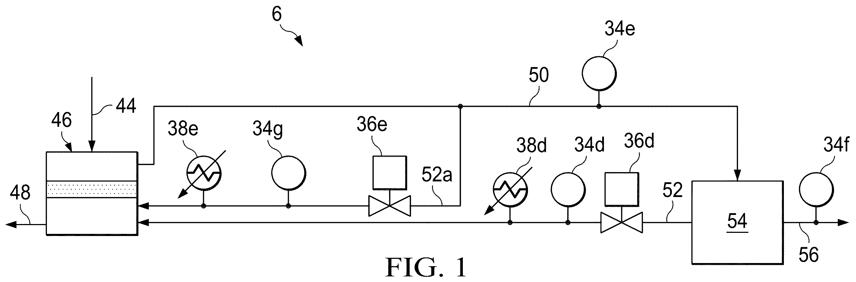

Referring now to FIG. 1, a carbon dioxide recovery system 6 that includes a membrane dryer or membrane drying stage 46 and a carbon dioxide liquefaction unit 54 is shown. The membrane drying stage 46 may comprise one or more process gas drying modules. It is understood that the terms "membrane drying stage," "membrane dryer," "membrane-based dryer," "process gas drying unit," "process gas drying module," "gas drying module," and "drying module" may be used interchangeably herein, such that, for example, the membrane drying stage or membrane dryer may be referred to herein as the process gas drying module (and vice versa). Process gas drying modules may be membrane-based drying modules, with each module comprising at least one gas drying membrane that is designed to allow water vapor in the process streams to selectively pass through the membrane, as permeate, while retaining the other components of the process streams, as retentate. Thus, the process gas drying modules may generate retentate streams imparted with a moisture content lower than the moisture content of the streams provided to the process gas drying module, i.e., dehydrated product streams or dehydrated gas streams.

In some instances, the membrane drying stage 46 is provided in the form of a Fluidpro® membrane-based dryer sold by Pentair, Inc. Suitable membrane-based dryers also include PRISM® membrane dryers sold by Air Products (Allentown, PA), membrane dryers available from the Donaldson Company, Inc. (Leuven, Belgium), membrane dryers available from Atlas Copco (Rock Hill, SC), and membrane dryers available from Parker (Haverhill, MA).

The carbon dioxide recovery system 6 may generate at least one product, preferably at least one purified or high purity product, such as purified or high-purity carbon dioxide. In some instances, the purified or high-purity carbon dioxide is liquid carbon dioxide. In some instances, the system 6 may generate a dried product gas, preferably a dried carbon dioxide product gas. Such a dried product gas may be generated by the at least one membrane drying stage (e.g., the process gas drying module 46). Generally, a gas provided to the process gas drying module 46 may be imparted with a first concentration of water. The process gas drying module 46 may separate water vapor from the gas, thereby generating the dried product gas. In such instances, the dried product gas may be imparted with a second concentration of water that is less than the first concentration of water.

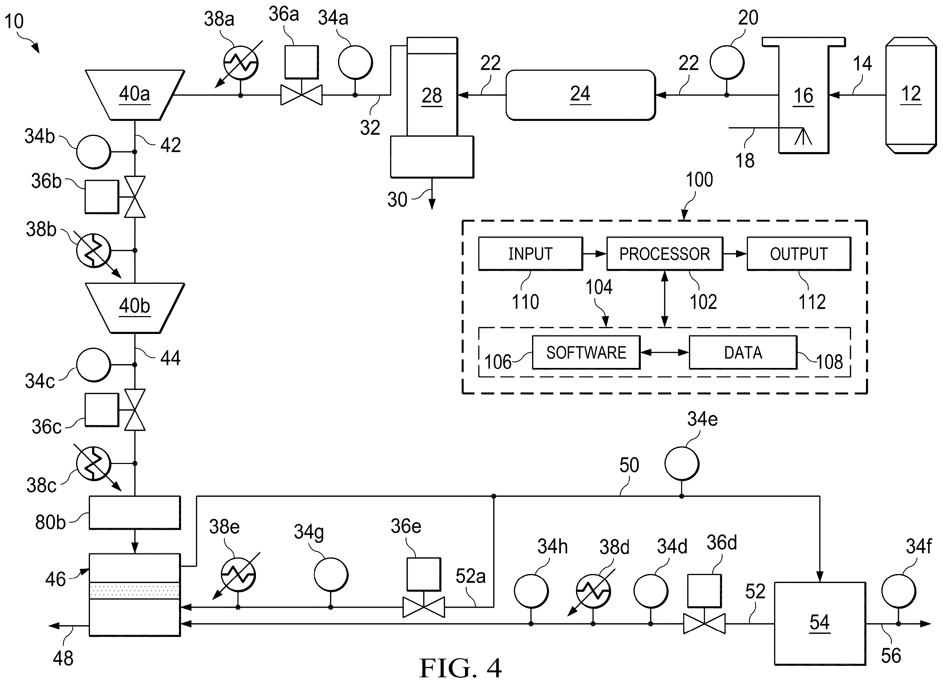

The membrane drying stage 46 may be provided in fluid communication with a source of fermentation gas 12 comprising a carbon dioxide-containing gas mixture 14 (see FIG. 4). In some instances, the fermentation gas may be generated in the production of fermented beverages. The fermentation gas may be produced from sources such as beer breweries, kombucha breweries, winemakers, distilleries, cideries, fermented soft drink producers, or combinations thereof. The carbon dioxide recovery system 6 may be located on-site at the source of fermentation or the system may be located off-site and the fermentation gas may be transferred to the system 6. The carbon dioxide-containing gas mixture may comprise carbon dioxide, alcohol (e.g., ethanol), $O_2$, $N_2$, $H_2$, $H_2S$, air, and/or water, among other substances.

Generally, the membrane drying stage 46 may utilize at least one membrane designed to separate water from the gas mixture based on solution diffusion across the membrane and/or size exclusion. The membrane itself is typically provided in the form of a thin film that is manufactured from polymers, metals, or ceramics. The membrane material may be chosen based on the selectivity of the material for one or more components of the gas mixture (e.g., one or more components of the process stream(s)). In some instances, the membrane may be provided in the form of a polymeric membrane that is highly selective for water. In some instances, the at least one membrane of the membrane drying stage 46 is imparted with a $H_2O/CO_2$ selectivity greater than about 10 (or 10), or about 10 to about 200 (or 10 to 200), or about 10 to about 100 (or 10 to 100). For example, the at least one membrane may comprise polydimethylsiloxane. In some such instances, the at least one gas separation membrane may be provided in the form of a hollow-fiber membrane.

The solubility of a gas component in a polymer membrane may be affected by properties of the gas, such as the condensability of the gas, and/or properties of the polymer, such as the glass transition temperature ($T_g$) of the polymer, at process conditions. For example, polymers that have glass transition temperatures above a process temperature(s) are glassy at process temperature(s). Glassy polymers or polymers in a glassy state are characterized by poor chain packing and voids between polymer chains, within which gases may be adsorbed. In a gas separation membrane made from such polymers, at process temperatures, the solubility of gases within the polymer membrane will increase. For example, membranes made from polyimide polymers, such as 3,3'-4,4'- benzophenone tetracarboxylic-dianhydride diaminophenylindane (BTDA-DAPI) (also known as Matrimid® 5218) polymers, are used for gas separation, due in part to the high glass transition temperatures of these polymers.

Furthermore, according to the dual-mode sorption model, which describes gas sorption in a glassy polymer, there are two different groupings of adsorbed gas, at equilibrium with one another, in the glassy polymer: a first grouping of gas that adsorbs within the voids of the glassy polymer and follows a Langmuir curve and a second grouping of gas that is adsorbed into the dense portion of the polymer and follows Henry's law. The dual-mode sorption model may be expressed as $C = kp + C'_h bp/(1+bp)$, where C is the total concentration of adsorbed gas in the glassy polymer, $C'_h$ is the maximum adsorption capacity within the voids, b is the Langmuir affinity constant (ratio of the rate coefficients of adsorption and desorption of gases in the void), p is pressure, and k is Henry's law sorption coefficient. According to the dual-mode sorption model, at low pressures, the voids within the glassy polymer are filled quickly. As the pressure of the gas increases, the voids become saturated with gas and any additional adsorbed gas is adsorbed into the dense portion of the polymer, following Henry's Law. It is believed that the selectivity of gas separation membranes made of polymers that follow the dual gas sorption model and exhibit dual sorption model behavior may be controlled by operating at lower pressures associated with Langmuir adsorption (in the voids) as opposed to operating at higher pressures associated with Henry's law adsorption.

A measure of the ability of a membrane to separate two gases is the selectivity, $\alpha$, defined as the ratio of the gas permeabilities, $P_1/P_2$. Selectivity can also be expressed as:

$$\alpha_{12} = \frac{P_1}{P_2} = \left[\frac{D_1}{D_2}\right]\left[\frac{k_1}{k_2}\right]$$

where D is the diffusion coefficient of the gas in the membrane [$cm^2/s$], which is a measure of the gas mobility, and k is Henry's law sorption coefficient, which links the concentration of the gas in the membrane material to the pressure in the adjacent gas [($cm^3$ (STP))/($cm^3 \cdot cmHg$)]. The ratio of the diffusion coefficients of the two gases, $D_1/D_2$, can be viewed as the mobility selectivity, reflecting the different sizes of the two molecules. The ratio of Henry's law sorption coefficients of the two gases, $k_1/k_2$, can be viewed as the solubility selectivity, reflecting the relative condensability of the two gases. Depending on the nature of the polymer, either the diffusion component or the sorption component of the permeability may dominate.

In some instances, the at least one gas separation membrane of the membrane drying stage 46 is imparted with a $H_2O/CO_2$ selectivity of about 1 to about 2000 (or 1 to 2000). For example, the at least one gas separation membrane of the membrane drying stage 46 may be imparted with a $H_2O/CO_2$ selectivity of about 5 to about 1000 (or 5 to 1000), or about 10 to about 200 (or 10 to 200). In some non-limiting examples, the one or more membrane(s) of the membrane drying stage 46 may be imparted with a $H_2O/CO_2$ selectivity ranging from about 5 to about 190, or about 10 to about 180, or about 15 to about 170, or about 20 to about 160, or about 25 to about 150, or about 30 to about 140, or about 35 to about 130, or about 40 to about 120, or about 45 to about 100. In other non-limiting examples, the one or more membrane(s) of the membrane drying stage 46 may be imparted with a $H_2O/CO_2$ selectivity of about 10 to about 100, or about 20 to about 100, or about 30 to about 100, or about 40 to about 100. In further non-limiting examples, the one or more membrane(s) of the membrane drying stage 46 may be imparted with a $H_2O/CO_2$ selectivity ranging from 5 to 190, or 10 to 180, or 15 to 170, or 20 to 160, or 25 to 150, or 30 to 140, or 35 to 130, or 40 to 120, or 45 to 100. In yet other non-limiting examples, the one or more membrane(s) of the membrane drying stage 46 may be imparted with a $H_2O/CO_2$ selectivity of 10 to 100, or 20 to 100, or 30 to 100, or 40 to 100.

In some instances, the one or more membrane(s) of membrane drying stage 46 may be imparted with a $H_2O/CO_2$ selectivity of at least about 10, or at least about 15, or at least about 20, or at least about 25, or at least about 30, or at least about 35, or at least about 40, or at least about 45, or at least about 50, or at least about 55, or at least about 60, or at least about 65, or at least about 70, or at least about 75, or at least about 80, or at least about 85, or at least about 90, or at least about 95, or at least about 100, or at least about 110, or at least about 120, or at least about 130, or at least about 140, or at least about 150, or at least about 160, or at least about 170, or at least about 180, or at least about 190, or at least about 200, or at least about 300, or at least about 400, or at least about 500, or at least about 750, or at least about 1000, or at least about 1500, or at least about 2000. In other instances, the one or more membrane(s) of membrane drying stage 46 may be imparted with a $H_2O/CO_2$ selectivity of at least 10, or at least 15, or at least 20, or at least 25, or at least 30, or at least 35, or at least 40, or at least 45, or at least 50, or at least 55, or at least 60, or at least 65, or at least 70, or at least 75, or at least 80, or at least 85, or at least 90, or at least 95, or at least 100, or at least 110, or at least 120, or at least 130, or at least 140, or at least 150, or at least 160, or at least 170, or at least 180, or at least 190, or at least 200, or at least 300, or at least 400, or at least 500, or at least 750, or at least 1000, or at least 1500, or at least 2000. It is to be understood that the one or more membrane(s) of the membrane drying stage 46 may be imparted with a $H_2O/CO_2$ selectivity of a single value, or a range of values, falling within any minimum and maximum value recited above.

Generally, gas permeation is driven by a partial pressure difference of the gas components from the feed side to the permeate side of the membrane. Several different methods for generating a partial pressure difference across a membrane can be utilized. For example, the pressure of the gas stream fed into the membrane drying stage 46 may be increased. As yet another example, the pressure of the gas stream on the permeate side of the membrane(s) of the membrane drying stage 46 may be reduced, such as by using a vacuum or vacuum pump (not illustrated) positioned on the permeate side of the membrane(s). In some instances, the membrane drying stage 46 may be fluidly coupled to one or more vacuum pumps arranged downstream of the membrane drying stage 46 to assist in producing a pressure differential across the membrane drying stage 46. Additionally, or alternatively, the one or more membrane drying stages may optionally include a sweep gas flowing along the permeate side of the membrane(s) thereof to assist in separating the components of the gas mixtures provided to the one or more membrane drying stages.

Advantageously, providing a gas stream that is a component of the gas separation system 10 as a sweep gas to the permeate side of the one or more gas separation membrane(s) of the membrane drying stage 46 may alter the partial pressure of the gases on the permeate side of the membrane, thereby helping generate a larger partial pressure difference of permeating gas or gases across the membrane (without increasing complexity or cost). In some instances, at least a portion of a gas sourced from an apparatus, unit, or system that is downstream of the membrane drying stage 46 may be provided as a sweep gas to the permeate side of the one or more gas separation membrane(s) of the membrane drying stage 46. The composition of the sweep gas may be the same or different from the composition of the feed stream, preferably different, provided that the water vapor partial pressure on the sweep side is lower than the water vapor partial pressure on the feed side. Preferably, the water vapor partial pressure of the sweep stream is less than the water vapor partial pressure of the feed stream.

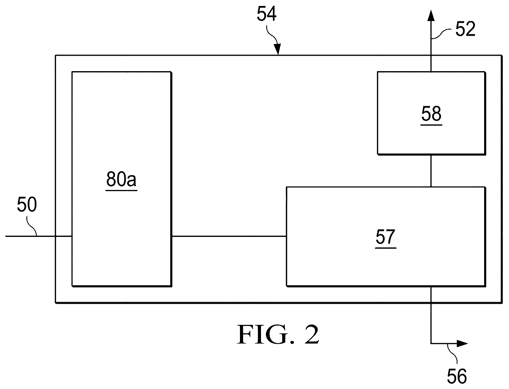

For example, as illustrated in FIG. 1, a sweep stream provided to the membrane drying stage 46 may comprise a first sweep stream 52 including off-gas purged from a carbon dioxide liquefaction unit 54 (see also FIG. 2). As such, the first sweep stream 52 may be in fluid communication with the carbon dioxide liquefaction unit 54 and the permeate side of the membrane drying stage 46. In some cases, the off-gas may comprise non-condensable gases (e.g., $CH_4$, $O_2$, $N_2$). As an additional example, the sweep stream provided to the membrane drying stage 46 may comprise a second sweep stream 52a including purified carbon dioxide that would otherwise be withdrawn as the product stream 56. As such, the second sweep stream 52a may be in fluid communication with the dehydrated gas stream 50 and the permeate side of the membrane drying stage 46. As a further example, the sweep stream provided to the membrane drying stage 46 may include an inert gas provided from another gas source coupled to the membrane drying stage 46, and/or other gases. In some instances, as shown in FIG. 1, at least a portion of the dehydrated gas stream 50 generated by the membrane drying stage 46 may be provided as a sweep gas to the permeate side of the one or more gas separation membrane(s) of the membrane drying stage 46. The hydrated sweep stream 48 that exits the membrane drying stage 46 may be further processed, discarded, and/or collected as a product.

In certain instances, both the first and second sweep streams 52, 52a may be provided to the membrane drying stage 46. In such instances, the sweep gas used to sweep the membrane of the membrane drying stage 46 may comprise the first and second sweep streams 52, 52a in any amount or proportion relative to each other. In other instances, only one of the first and second sweep streams 52, 52a may be provided as a sweep gas to the membrane drying stage 46.

The carbon dioxide recovery system 6 may optionally include multiple membrane drying stages (not shown). For example, the system 6 may include a first membrane drying stage and a second membrane drying stage. In some instances, the first membrane drying stage may be fluidly coupled to the source of fermentation gas 12, and the carbon dioxide-containing gas mixture 14 (shown in FIG. 4) may be fed to the first membrane drying stage (optionally, after additional processing or treatment of the carbon dioxide-containing gas mixture). In such instances, the carbon dioxide-containing gas mixture 14 may be imparted with a first concentration of water and the first membrane drying stage may generate a first dried or dehydrated gas stream 50 imparted with a second concentration of water that is less than the first concentration of water. The system 6 may optionally include a second membrane drying stage fluidly coupled to the first membrane drying stage and the first dehydrated gas stream 50 may be fed to the second membrane drying stage (not shown). In such instances, the first dehydrated gas stream 50 may be imparted with a third concentration of water and the second membrane drying stage may generate a second dried or dehydrated gas stream imparted with a fourth concentration of water that is less than the third concentration of water. The first membrane drying stage and/or the second membrane drying stage may optionally include a sweep gas flowing along the permeate side of the membrane(s) thereof to assist in separating water vapor from the gas provided to the membrane drying stages.

Referring again to FIG. 1, the system 6 disclosed herein offers several advantages over conventional systems. For example, one advantage of using the membrane drying stage 46 to dry a process stream is that the membrane drying stage 46 allows for a reduction in the total amount of energy required to operate the system. Off-gas from the carbon dioxide liquefaction unit 54 may be recycled back to the membrane drying stage 46 as the first sweep stream 52, which may flow along the permeate side of the membrane(s) of the membrane drying stage 46. The use of the membrane drying stage 46 eliminates the need for a dryer unit (e.g., based on semi-continuous temperature swing adsorption). This also reduces the overall footprint of the system 6 and the energy requirements of the system 6.

In some instances, all or substantially all of the off-gas purged from the carbon dioxide liquefaction unit 54 may be utilized as the first sweep stream 52. Preferably, only a portion of the off-gas of the carbon dioxide liquefaction unit 54 is utilized as the first sweep stream 52. Generally, it may be desirable to minimize the amount of sweep gas provided to the membrane drying stage 46. The portion of the off-gas that is not utilized as a sweep gas may be vented or otherwise discarded, further processed, recycled, and/or collected as a product.

In some instances, the dehydrated gas stream 50, is provided to the carbon dioxide liquefaction unit 54, which cools/condenses and liquefies the dehydrated gas stream 50 (e.g., by using purified liquid carbon dioxide as a cooling medium). Gaseous impurities may then be discharged and removed (via a stripper/reboiler 57, see FIG. 2) from the liquefied carbon dioxide, while purified liquid carbon dioxide is withdrawn as a product (i.e., a product stream 56). Providing a dehydrated gas stream 50 to the carbon dioxide liquefaction unit 54 facilitates and enables the performance of the carbon dioxide liquefaction unit 54, as the presence of moisture may cause the carbon dioxide liquefaction unit 54 to freeze during operation and stop functioning. A portion of, substantially all, or all of the non-condensable gases and vapors may be recycled to the membrane drying stage 46 as the first sweep stream 52. The carbon dioxide liquefaction unit 54 may include at least one condenser 58 (e.g., two condensers) and a stripper/reboiler 57 coupled to the condenser via suitable piping, as shown in FIG. 2. It is to be appreciated that the stripper/reboiler 57 may be provided in the form of a stripper, a reboiler, or a combination thereof. The carbon dioxide liquefaction unit 54 may optionally include a filter 80a (e.g., activated carbon filter) to adsorb one or more contaminants from the dehydrated gas stream 50 including, but not limited to siloxanes, volatile organic compounds, $H_2S$, trace impurities, such as ketones and terpenes, and combinations thereof. The activated carbon filter may or may not be regenerative.

The dehydrated gas stream 50 generated by the membrane drying stage 46 may be imparted with a concentration of water that is less than the concentration of water in the gas provided to the membrane drying stage 46 and/or the system 10 (e.g., the carbon dioxide-containing gas mixture 14). In some instances, the concentration of water in the dehydrated gas stream 50 may be imparted with a value of about 0 ppm by volume to about 50 ppm by volume, although in some instances the concentration of water in the dehydrated gas stream 50 may be greater than these values (e.g., 100 ppm by volume, 200 ppm by volume). For example, the concentration of water in the dehydrated gas stream 50 may be imparted with a value of about 0 ppm to about 45 ppm by volume, or about 0 ppm to about 40 ppm by volume, or about 0 ppm to about 35 ppm by volume, or about 0 ppm to about 30 ppm by volume, or about 0 ppm to about 25 ppm by volume, or about 0 ppm to about 20 ppm by volume, or about 0 ppm to about 20 ppm by volume, or about 0 ppm to about 15 ppm by volume, or about 0 to about 10 ppm by volume, or about 0 ppm to about 5 ppm by volume. As an additional example, the concentration of water in the dehydrated gas stream 50 may be imparted with a value of 0 ppm by volume to 50 ppm by volume. In such instances, the concentration of water in the dehydrated gas stream 50 may be imparted with a value of 0 ppm to 45 ppm by volume, or 0 ppm to 40 ppm by volume, or 0 ppm to 35 ppm by volume, or 0 ppm to 30 ppm by volume, or 0 ppm to 25 ppm by volume, or 0 ppm to 20 ppm by volume, or 0 ppm to 20 ppm by volume, or 0 ppm to 15 ppm by volume, or 0 to 10 ppm by volume, or 0 ppm to 5 ppm by volume. It is to be understood that the concentration of water in the dehydrated gas stream 50 may be imparted with a value, or a range of values, falling between the minimum and maximum values recited above.

In some instances, the concentration of water in the dehydrated gas stream 50 may be imparted with a value of no more than about 50 ppm by volume. For example, the dehydrated gas stream 50 may be imparted with a concentration of water that is no more than 50 ppm by volume, or no more than 25 ppm by volume, or no more than 20 ppm by volume, or no more than 15 ppm by volume, or no more than 14 ppm by volume, or no more than 13 ppm by volume, or no more than 12 ppm by volume, or no more than 11 ppm by volume, or no more than 10 ppm by volume, or no more than 9 ppm by volume, or no more than 8 ppm by volume, or no more than 7 ppm by volume, or no more than 6 ppm by volume, or no more than 5 ppm by volume, or no more than 4 ppm by volume, or no more than 3 ppm by volume, or no more than 2 ppm by volume, or no more than 1 ppm by volume, or no more than 0.1 ppm by volume, or no more than 0.05 ppm by volume, or no more than 0.01 ppm by volume, or no more than 0.001 ppm by volume. As an additional example, the dehydrated gas stream 50 may be imparted with a concentration of water that is no more than about 50 ppm by volume, or no more than about 25 ppm by volume, or no more than about 20 ppm by volume, or no more than about 15 ppm by volume, or no more than about 14 ppm by volume, or no more than about 13 ppm by volume, or no more than about 12 ppm by volume, or no more than about 11 ppm by volume, or no more than about 10 ppm by volume, or no more than about 9 ppm by volume, or no more than about 8 ppm by volume, or no more than about 7 ppm by volume, or no more than about 6 ppm by volume, or no more than about 5 ppm by volume, or no more than about 4 ppm by volume, or no more than about 3 ppm by volume, or no more than about 2 ppm by volume, or no more than about 1 ppm by volume, or no more than about 0.1 ppm by volume, or no more than about 0.05 ppm by volume, or no more than about 0.01 ppm by volume, or no more than about 0.001 ppm by volume.

It is to be appreciated that the concentration of water in the dehydrated gas stream 50, by volume, may be imparted with a value or a range of values falling within any minimum value and maximum value recited above.

In some instances, the dehydrated gas stream 50 generated by the membrane drying stage 46 may be imparted with a dewpoint of no more than about -20°C to no less than about -75°C (or no more than -20°C to no less than -75°C). For example, the dehydrated gas stream 50 generated by the membrane drying stage 46 may be imparted with a dewpoint of no less than -75°C, or no less than -70°C, or no less than -65°C, or no less than -60°C, or no less than -55°C, or no less than -50°C, or no less than -45°C, or no less than -40°C, or no less than -35°C, or no less than -30°C. As an additional example, the dehydrated gas stream 50 generated by the membrane drying stage 46 may be imparted with a dewpoint of no less than about -75°C, or no less than about -70°C, or no less than about -65°C, or no less than about -60°C, or no less than about -55°C, or no less than about -50°C, or no less than about -45°C, or no less than about -40°C, or no less than about -35°C, or no less than about -30°C. It is to be appreciated that the dehydrated gas stream 50 may be imparted with a dewpoint value, or a range of dewpoint values, falling within any minimum value and maximum dewpoint value recited above.

In some instances, the dehydrated gas stream 50 generated by the membrane drying stage 46 may be imparted with a dewpoint of no less than -45°C. In each such instance, the pressure of the dehydrated gas stream 50 may be at least 2 bar, or at least 3 bar, or at least 4 bar, or at least 5 bar, or at least 6 bar, or at least 7 bar, or at least 8 bar, or at least 9 bar, or at least 10 bar, or at least 11 bar, or at least 12 bar, or at least 13 bar, or at least 14 bar, or at least 15 bar, or at least 16 bar, or at least 17 bar, or at least 18 bar, or at least 19 bar, or at least 20 bar. Alternatively, the pressure of the dehydrated gas stream 50 may be at least about 2 bar, or at least about 3 bar, or at least about 4 bar, or at least about 5 bar, or at least about 6 bar, or at least about 7 bar, or at least about 8 bar, or at least about 9 bar, or at least about 10 bar, or at least about 11 bar, or at least about 12 bar, or at least about 13 bar, or at least about 14 bar, or at least about 15 bar, or at least about 16 bar, or at least about 17 bar, or at least about 18 bar, or at least about 19 bar, or at least about 20 bar. In some instances, the pressure of the dehydrated gas stream 50 may be imparted with the values recited above when the dewpoint is any of the dewpoints recited herein. It is also to be appreciated that the pressure of the dehydrated gas stream 50 may be imparted with a value, or a range of values, falling within any minimum value and maximum pressure value recited above.

The carbon dioxide-containing gas mixture 14 may be provided directly to the membrane drying stage 46. Preferably, the carbon dioxide-containing gas mixture 14 is processed or treated before being fed to the membrane drying stage 46, as shown in FIG. 4, which provides a system 10 for recovering carbon dioxide from a beverage fermentation process. In some instances, the fermented beverage comprises beer and the system 10 is a brewery. The system 10 may include one or more sources of fermentation gas 12 and at least one membrane drying stage 46 that is designed to remove moisture from at least one process or product stream generated by the system 10. The system 10 may generate various process and product streams and each process or product stream may be imparted with a certain concentration of water. Any of the process or product streams may be provided to the at least one membrane drying stage 46 to remove water from the stream and generate a dried stream with a reduced concentration of water. The product gas streams generated by the system 10 may at least partially depend on the components of the carbon dioxide-containing gas mixture 14 provided to the system 10 from the source of fermentation gas 12. The product gas streams generated by the system 10 may be collected, stored, vented, further processed, provided to a transport pipeline, provided to an end user, and/or otherwise utilized by the operator of the system 10, as desired. As shown in FIG. 4, the system 10 includes the carbon dioxide recovery system 6 of FIG. 1, including a membrane dryer or membrane drying stage 46 and a carbon dioxide liquefaction unit 54.

Referring again to FIG. 4, the carbon dioxide-containing gas mixture 14 may be fed to a foam separator 16, which may include a water spray 18 to suppress foam. As such, the foam separator 16 may be configured or designed to suppress foam formation or prevent foam formation in the carbon dioxide-containing gas mixture 14. The carbon dioxide-containing gas mixture 14 may then be provided to a foam trap 20 to remove some, substantially all, or all foam carryover from the carbon dioxide-containing gas mixture 14. The removal of foam from the carbon dioxide-containing gas mixture 14 may help protect the carbon dioxide recovery system 6 that is downstream of the foam separator 16 and/or the foam trap 20. The foam separator 16 and/or foam trap 20 may produce a substantially foam-free fermentation gas mixture 22 (or, in some cases, a foam-free gas mixture). In certain instances, the substantially foam-free fermentation gas mixture 22 may be fed to a gas balloon 24, which collects and buffers the substantially foam-free fermentation gas mixture 22. The buffering of the gas mixture may minimize start-up frequency of downstream processes and/or ensure sufficient running time for efficient downstream operation. The gas balloon 24 may optionally be double-coated to reduce or prevent air/$O_2$ ingress. The volume of the gas balloon 24 may be monitored, such that downstream processes are turned down when the volume is reduced. In some instances, the substantially foam-free fermentation gas mixture 22 is fed from the gas balloon 24 to a gas washer 28 that removes water-soluble impurities or contaminants, such as ethanol, from the substantially foam-free fermentation gas mixture 22 to produce a contaminant stream 30 and a washed gas stream 32. The contaminant stream 30 may be purged from the system 10 (e.g., provided to a drain) or further processed. The washed gas stream 32 may be fed to at least one compressor (e.g., the first and second gas transport device 40a, 40b) and/or filtered (e.g., by a filter 80b) to remove impurities before being fed to the membrane drying stage 46.

In some instances, washed gas stream 32 may undergo further processing before being provided to the membrane drying stage 46. For example, the washed gas stream 32 may be provided to a suction side of an optional first gas transport device 40a that is configured or designed to adjust (e.g., increase) the pressure of the washed gas stream 32, producing a first gas transport device discharge stream 42. The optional first gas transport device 40a may comprise a mechanical device that increases the pressure of the washed gas stream 32 and may be provided in the form of, for example, a compressor or a blower. In some instances, the optional first gas transport device 40a may be configured or designed to compress the washed gas stream 32 to a first pressure. The first pressure may be imparted with a value of about 1.5 bar (150 kPa) to 100 bar (10000 kPa), or more. For example, the first pressure may be imparted with a value of 5 bar (500 kPa) to 90 bar (9000 kPa), or 5 bar (500 kPa) to 80 bar (8000 kPa), or 5 bar (500 kPa) to 70 bar (7000 kPa), or 5 bar (500 kPa) to 60 bar (6000 kPa), or 5 bar (500 kPa) to 50 bar (5000 kPa), or 5 bar (500 kPa) to 40 bar (4000 kPa), or 5 bar (500 kPa) to 35 bar (3500 kPa), or 5 bar (500 kPa) to 25 bar (2500 kPa). In certain instances, the first pressure may be imparted with a value of about 1.5 bar (150 kPa) to about 100 bar (10000 kPa), or more. For example, the first pressure may be imparted with a value of about 5 bar (500 kPa) to about 90 bar (9000 kPa), or about 5 bar (500 kPa) to about 80 bar (8000 kPa), or about 5 bar (500 kPa) to about 70 bar (7000 kPa), or about 5 bar (500 kPa) to about 60 bar (6000 kPa), or about 5 bar (500 kPa) to about 50 bar (5000 kPa), or about 5 bar (500 kPa) to about 40 bar (4000 kPa), or about 5 bar (500 kPa) to about 35 bar (3500 kPa), or about 5 bar (500 kPa) to about 25 bar (2500 kPa). It is to be understood that the first pressure may be imparted with any value, or a range of values, falling within the minimum and maximum pressure values recited above.

In some instances, the first gas transport device discharge stream 42 is fed to an optional second gas transport device 40b, which is configured or designed to further adjust (e.g., increase) the pressure of the first gas transport device discharge stream 42 to a second pressure, producing a second gas transport device discharge stream 44. The second pressure may be imparted with a value of 1.5 bar (150 kPa) to 100 bar (10000 kPa), or more. For example, the first pressure may be imparted with a value of 5 bar (500 kPa) to 90 bar (9000 kPa), or 5 bar (500 kPa) to 80 bar (8000 kPa), or 5 bar (500 kPa) to 70 bar (7000 kPa), or 5 bar (500 kPa) to 60 bar (6000 kPa), or 5 bar (500 kPa) to 50 bar (5000 kPa), or 5 bar (500 kPa) to 40 bar (4000 kPa), or 5 bar (500 kPa) to 35 bar (3500 kPa), or 5 bar (500 kPa) to 25 bar (2500 kPa). In other instances, the second pressure may be about 1.5 bar (150 kPa) to about 100 bar (10000 kPa), or more. For example, the first pressure may be imparted with a value of about 5 bar (500 kPa) to about 90 bar (9000 kPa), or about 5 bar (500 kPa) to about 80 bar (8000 kPa), or about 5 bar (500 kPa) to about 70 bar (7000 kPa), or about 5 bar (500 kPa) to about 60 bar (6000 kPa), or about 5 bar (500 kPa) to about 50 bar (5000 kPa), or about 5 bar (500 kPa) to about 40 bar (4000 kPa), or about 5 bar (500 kPa) to about 35 bar (3500 kPa), or about 5 bar (500 kPa) to about 25 bar (2500 kPa). It is to be understood that the second pressure may be imparted with any value, or a range of values, falling within the minimum and maximum pressure values recited above.

The first gas transport device discharge stream 42 may optionally be cooled before being fed into the optional second gas transport device 40b. In some instances, the second gas transport device discharge stream 44 is fed to the membrane drying stage 46. The second gas transport device discharge stream 44 may optionally be treated to remove impurities before flowing to the membrane drying stage 46. For example, impurities, including siloxanes, volatile organic compounds, $H_2S$, and trace impurities, such as ketones and terpenes, may be removed from the second gas transport device discharge stream 44 via adsorption using the filter 80b (e.g., when the filter 80b is provided as an activated carbon filter). The activated carbon filter may or may not be regenerative (e.g., the activated carbon filter may require regeneration or reactivation by thermally induced desorption). In some instances, the second gas transport device discharge stream 44 may be fed to or through the filter 80b (e.g., an activated carbon filter) to adsorb one or more contaminants from the second gas transport device discharge stream 44.

In certain instances, the system 10 may include gas transport devices (e.g., the first and second gas transport device 40a, 40b), process measuring devices (e.g., process measuring devices 34a-34h), and process control devices (e.g., one or more valves 36a-36e, one or more temperature control devices 38a-38e), and/or a gas recovery system (e.g., a carbon dioxide liquefaction unit 54). For example, the system 10 may be provided with a carbon dioxide-containing gas mixture 14 from a source of fermentation gas 12, at least one membrane drying stage 46, one or more gas transport devices (e.g., the first and second gas transport device 40a, 40b), process measuring devices (e.g., process measuring devices 34a-34h), and process control devices (e.g., one or more valves 36a-36e, one or more temperature control devices 38a-38e), and/or a gas recovery system (e.g., a carbon dioxide liquefaction unit 54).

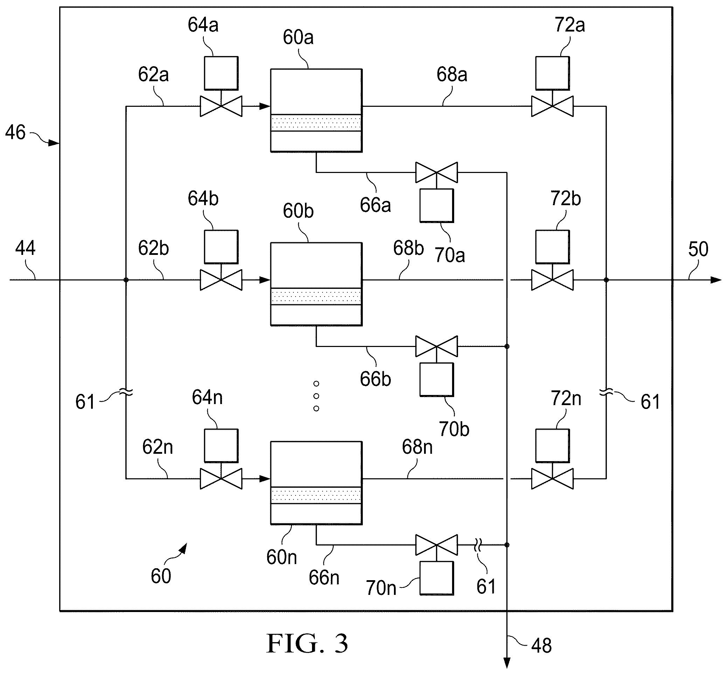

Optionally, the system 10 may include more than one membrane drying stage (not shown). If at least two membrane drying stages are provided, the membrane drying stages may be arranged in series. In some instances, the system 10 may include only one of the membrane drying stage 46, as shown in FIG. 4. In other instances, the system 10 may include two membrane drying stages, three membrane drying stages, or more membrane drying stages arranged in any configuration. Furthermore, as shown in FIG. 3 and described in more detail below, the membrane drying stages 46 (and any additional membrane drying stages provided with the system 10) may include a plurality of gas drying membranes 60 configured therein. The plurality of membranes 60 may be configured in parallel, as shown in FIG. 3, in which case the plurality of parallel-configured membranes 60 may be considered a single drying stage, where the surface area of the single drying stage is increased with each additional membrane 60n.

It is to be understood that the components of the system 10 described with reference to FIG. 4 may be alternatively arranged in the system 10. Furthermore, in some instances, one or more of the components of the system 10 described with reference to FIG. 4 may be omitted. In some cases, the system 10 may further include additional components without departing from the spirit of this disclosure.

FIG. 4 illustrates the system 10 used in conjunction with an example process control system 100 (also referred to as a controller 100) according to some instances of the present disclosure. The process control system 100 may be configured or designed to control the operation of the system 10. For example, the process control system 100 may assist in starting the process, stopping the process, and adjusting process parameters to change the process performance. In some instances, the process control system 100 may be designed to control the concentration of a selected component in a process or product stream and/or to monitor and adjust system parameters to control energy consumption and to reduce operational costs.

Referring again to FIG. 4, in some instances, the process control system may include a controller 100, one or more process measuring devices (e.g., 34a-34h), one or more process control devices (e.g., a first gas transport device 40a, an optional second gas transport device 40b, one or more valves 36a-36e, and one or more temperature control devices 38a-38e), and suitable connections that allow process information acquired by the one or more measuring devices to be transferred to the controller 100, as well as output information from the controller 100 to be transferred to the one or more process control devices to perform a process control action. Example process control actions may include using the process control devices to alter one or more of a pressure, a flow rate, a dewpoint, and/or a temperature value of a process or product stream based on one or more measured values from the process measuring devices.

Suitable connections may include transmitters that allow process signals, such as electrical signals or gas pressure signals (e.g., air, nitrogen, etc.), to be transmitted between the controller 100 and the measuring devices (e.g., 34a-34h) and the process control devices (e.g., 40a-40b, 36a-36e, and 38a-38e). The electrical signals may be transferred via a wired connection or through a wireless network connection. Other hardware elements may be included in the process control system, for example, transducers, analog-to-digital (A/D) converters, and digital-to-analog (D/A) converters that allow process information to be recognizable in computer form, and computer commands accessible to the process. For visual clarity, the connections between the controller 100, the one or more measuring devices, and the one or more process control devices have been omitted from FIG. 4.

In some instances, the system 10 may include one or more process measuring devices (e.g., 34a-34h). For example, the system 10 may include one or more of a washed gas stream measuring device 34a located in the washed gas stream 32, a first gas transport device discharge stream measuring device 34b located in the first gas transport device discharge stream 42, a measuring device 34c located in the second gas transport device discharge stream 44, a first sweep stream measuring device 34d located in the first sweep stream 52, a measuring device 34e located in the dehydrated gas stream 50, a $CO_2$ product stream measuring device 34f located in the product stream 56, and/or a second sweep stream measuring device 34g located in the second sweep stream 52a. In some instances, an additional sweep stream measuring device 34h may be provided in the first sweep stream 52. Each of the process measuring devices 34a-34h may be configured or designed to measure a process parameter, or multiple process parameters, such as pressure, temperature, flow, composition, viscosity, humidity, moisture, dewpoint, or density.

In some instances, the one or more measuring devices 34a-34h includes a pressure measuring device. Suitable pressure measuring devices include, but are not limited to, pressure transducers, diaphragm bellows, Bourdon tubes, strain gauges, piezoelectric sensors, ionization gauges, and combinations thereof.

In some instances, the one or more measuring devices 34a-34h may include a flow measuring device. Suitable flow measuring devices may include, but are not limited to, pitot tubes, orifice flow meters, turbine flow meters, electromagnetic field flow meters, neutron bombardment flow meters, ultrasound flow meters, hot-wire anemometry flow meters, angular momentum flow meters, Coriolis mass flow meters, and combinations thereof.

In some instances, the one or more measuring devices 34a-34h includes a temperature measuring device. Suitable temperature measuring devices include, but are not limited to, thermocouples, thermistors (e.g., a resistance sensor), oscillating quartz crystal thermometers, radiation pyrometers, and combinations thereof.

In some instances, the one or more measuring devices 34a-34h may include a density measuring device. Suitable density measuring devices include, but are not limited to, vibrating tube densometers, X-ray densometers, differential pressure densometers, and combinations thereof.

In some instances, the one or more measuring devices 34a-34h may include a viscosity measuring device. Suitable viscosity measuring devices include, but are not limited to, capillary viscometers, vibrating ball viscometers, and combinations thereof.

In some instances, the one or more measuring devices 34a-34h may include a humidity measuring device. Suitable humidity measuring devices may include hygrometers.

In some instances, the one or more measuring devices 34a-34h may include a dewpoint measuring device. Suitable dewpoint measuring devices include those available from Vaisala (Finland) and those available from Michell Instruments (e.g., QMA analyzers).

In some instances, the one or more measuring devices 34a-34h may include a composition measuring device. Suitable composition measuring devices include, but are not limited to, potentiometry sensors, moisture content sensors (hygrometry or psychrometry), gas chromatography, a refractive index device, ultrasound, a spectroscopy system (e.g., UV, visible, IR, Mossbauer, Raman, atomic-emission device, X-ray device, electron, ion, nuclear magnetic resonance), a polarography device, a conductimetry device, a mass spectrometry system, a differential thermal analysis device, a thermogravimetric analysis system, and combinations thereof.

Referring to FIGS. 1 and 4, the system 10 may include one or more process control devices, such as valves (e.g., 36a-36e), temperature control devices (e.g., 38a-38e), a first gas transport device 40a, and/or an optional second gas transport device 40b.

In some instances, the system 10 may include one or more valves 36a-36e that are adjustable between a fully open position and a fully closed position. The one or more valves 36a-36e may be configured or designed to regulate the pressure of the process streams of the system 10. For example, the system 10 may include a washed gas stream valve 36a located in the washed gas stream 32, a valve 36b located in the first gas transport device discharge stream 42, a valve 36c located in the second gas transport device discharge stream 44, a valve 36d located in the first sweep stream 52, and/or a valve 36e located in the second sweep stream 52a. Example valves for use in the system 10 include, without limitation, motor-driven valves, pneumatic valves, and manually adjustable valves.

In certain instances, the controller 100 may control or adjust one or more of the valves 36a-36e in response to measured values provided to the controller 100 by the one or more process measuring devices (e.g., 34a-34h). For example, the controller 100 may adjust one or more of the valves 36a-36e (e.g., 36d) such that additional sweep gas is provided to the permeate side of the membrane(s) of the membrane drying stage 46 when the purity of a product gas (e.g., dehydrated gas stream 50 or product stream 56), as measured by the process measuring devices 34e and 34f, respectively, drops below a first threshold value and/or if the moisture content of a product gas (e.g., dehydrated gas stream 50 or product stream 56), as measured by the process measuring devices 34e and 34f, respectively, rises above a second threshold value. As an additional example, the controller 100 may adjust the valves (e.g., sweep stream valve 36d) such that less sweep gas is provided to the permeate side of the membrane(s) of the membrane drying stage 46 when the purity of a product gas (e.g., dehydrated gas stream 50 or product stream 56), as measured by the process measuring devices 34e and 34f, respectively, is above a third threshold value. As yet another example, the controller 100 may adjust the valves (e.g., sweep stream valve 36d) such that less sweep gas is provided to the permeate side of the membrane(s) of the membrane drying stage 46 when the obtained recovery of a product gas (e.g., dehydrated gas stream 50 or product stream 56), as measured by the process measuring devices 34e and/or 34f, drops below a fourth threshold value. As would be understood, these examples are non-limiting, and additional determinations may be made by the controller 100 with regard to opening, closing, and adjusting any of the valves 36a-36e.

The system 10 may include one or more temperature control devices (e.g., 38a-38e) that may be used to adjust the temperature (e.g., heat or cool) of the process or product streams. For example, the system 10 may include one or more of a temperature control device 38a located in the washed gas stream 32, a temperature control device 38b located in the first gas transport device discharge stream 42, a temperature control device 38c configured in the second gas transport device discharge stream 44, a temperature control device 38d configured in the first sweep stream 52, and a temperature control device 38e configured in the second sweep stream 52a. Suitable temperature control devices 38a-38e include devices that heat or cool the process stream, such as heat exchangers or electric heaters.

The controller 100 may include a processor 102, and a memory 104 that includes software 106 and data 108 and is designed for storage and retrieval of processed information to be processed by the processor 102. The processor 102 includes an input 110 and may receive information via the input 110. The input 110 may be configured or designed to receive process signals from the one or more of the measuring devices (34a-34h) and/or the one or more process control devices (e.g., 40a-40b, 36a-36e, and 38a-38e). The controller 100 may operate autonomously or semi-autonomously, or the controller 100 may read executable software instructions from the memory 104 or a computer-readable medium (e.g., a hard drive, a CD-ROM, flash memory), or may receive instructions via the input 110 from a user, or another source logically connected to a computer or device, such as another networked computer or server. For example, the server may be used to control the system 10 via the controller 100 on-site or remotely.

The processor 102 may process the process signals to generate an output 112, which may take the form of a process control action. Example process control actions may include sending signals to the one or more process control devices (e.g., 40a-40b, 36a-36e, and 38a-38e) to effectuate a change in one or more process parameters (e.g., pressure, flow rate, composition, membrane surface area, and/or temperature) of one or more process or product streams in system 10.

In some instances, the controller 100 may include programming to adjust the process parameters in the system 10 using the one or more process control devices (e.g., 40a-40b, 36a-36e, and 38a-38e) in response to measured values obtained from the one or more measuring devices (e.g., 34a-34h) to maintain a selected set-point in the dehydrated gas stream 50 output (retentate) of the membrane drying stage 46, such as a selected dewpoint.

For example, the controller 100 may be programmed to monitor one or more process parameters (e.g., dewpoint) in the dehydrated gas stream 50 using the measuring device 34e located in the dehydrated gas stream 50. Once a change in the process parameter is detected or a user-specified threshold has been reached, the pressure of the second sweep stream 52a may be adjusted using the sweep stream valve 36d located in the second sweep stream 52a to maintain the selected set-point. The selected set-point in the dehydrated gas stream 50 may thus be maintained by steering the pressure in the second sweep stream 52a using the sweep stream valve 36d. Alternatively, or additionally, measuring device 34c may be used to monitor one or more process parameters in the second gas transport device discharge stream 44.

In some instances, the controller 100 is in electrical communication with a measuring device 34e configured or designed to measure a parameter of the dehydrated gas stream 50 and a valve 36d located in the second sweep 52a where the controller 100 is configured or designed to maintain or adjust the position of the valve 36d located in the second sweep stream 52a in response to the measured parameter.

In some instances, the controller 100 includes programming to adjust process parameters in the system 10 using the one or more process control devices (e.g., 40a-40b, 36a-36e, and 38a-38e) in response to measured values obtained from the one or more measuring devices (e.g., 34a-34h) to maintain a selected set-point in the first gas transport device discharge stream 42, such as a desired pressure, a desired component composition, and/or a desired flow rate.

In some instances, the controller 100 includes programming to adjust process parameters in the system 10 using the one or more process control devices (e.g., 40a-40b, 36a-36e, and 38a-38e) in response to measured values obtained from the one or more measuring devices (e.g., 34a-34h) to maintain a selected set-point in the second gas transport device discharge stream 44, such as a desired pressure, a desired component composition, and/or a desired flow rate.

In some instances, the controller 100 includes programming to adjust process parameters in the system 10 using the one or more process control devices (e.g., 40a-40b, 36a-36e, and 38a-38e) in response to measured values obtained from the one or more measuring devices (e.g., 34a-34h).

For example, the controller 100 may be programmed to acquire one or more process parameters in the washed gas stream 32 using the washed gas stream measuring device 34a. Once a change is detected or a user-specified threshold has been reached, the pressure of the washed gas stream 32 may be adjusted using the washed gas stream valve 36a to maintain the selected set-point.

In some instances, the controller 100 may include programming to adjust process parameters in the system 10 using the one or more process control devices (e.g., 40a-40b, 36a-36e, and 38a-38e) in response to measured values obtained from the one or more measuring devices (e.g., 34a-34h) to maintain a selected temperature set-point for the membrane drying stage 46.

For example, the controller 100 may be programmed to acquire one or more process parameters in the system 10 using one or more of the process measuring devices (e.g., 34a-34h) and adjust the operation temperature of the membrane drying stage 46, using the temperature control device 38a located in the washed gas stream 32, the temperature control device 38b located in the first gas transport device discharge stream 42, and/or the temperature control device 38c located in the second gas transport device discharge stream 44 to obtain a selected temperature set-point.

In some instances, particularly when the gas mixture is flue gas, a pretreatment unit (not shown) may be configured in the carbon dioxide-containing gas mixture line 14 and may optionally be used to remove contaminants from the gas mixture. For example, the pretreatment unit may be configured or designed to perform filtration (e.g., via an activated carbon media), adsorption, absorption, or condensation to remove one or more contaminants from the gas mixture including, but not limited to siloxanes, volatile organic compounds, $H_2S$, water vapor, and combinations thereof.

Referring now to FIG. 3, one or more of the membrane drying stage(s) 46 provided in the system 6, 10 may include a plurality of gas drying membranes 60 configured therein. In some instances, one or more of the membrane drying stage(s) 46 may be configured with a first gas drying membrane 60a, a second gas drying membrane 60b, and optionally (as indicated by break lines 61) one or more additional gas drying membranes 60n in fluid communication with the incoming stream (e.g., the second gas transport device discharge stream 44). The incoming stream may then be split into multiple inlet streams to feed into the plurality of gas drying membranes 60. For example, the incoming stream may be split into a first interior membrane stage inlet stream 62a, a second interior membrane stage inlet stream 62b, and optionally one or more additional interior membrane stage inlet streams 62n. Each of the interior membrane stage inlet streams 62a, 62b, and 62n may be configured with a valve 64a, 64b, and 64n to regulate the flow rate to the respective gas drying membrane unit.

In some instances, each of the gas drying membranes 60a, 60b, 60n generates an interior membrane stage permeate stream 66a, 66b, 66n and retentate stream 68a, 68b, 68n, respectively, from the incoming gas mixture. The permeate streams 66a, 66b, 66n may be combined to form a pooled permeate stream (e.g., a pooled permeate stream 48) that exits the one or more membrane drying stage(s) 46. In some instances, permeate control valves 70a, 70b, 70n may be configured in the permeate streams 66a, 66b, 66n to regulate the gas flow rate in the pooled permeate stream. In an alternative arrangement, the permeate control valves 70a, 70b, 70n may be combined into a single valve positioned in the pooled permeate stream (e.g., the pooled permeate stream 48). Similarly, each of the retentate streams 68a, 68b, 68n may be combined to form a pooled retentate stream (e.g., a pooled retentate stream 50) that exits the one or more membrane drying stage(s) 46. Retentate control valves 72a, 72b, 72n may be configured or designed to regulate the gas flow rate of the pooled retentate stream. In an alternative arrangement, the retentate control valves 72a, 72b, 72n may be combined into a single valve positioned in the pooled retentate stream (e.g., the pooled retentate stream 50).

In some instances, the controller 100 is placed in electrical communication with the first interior control valve 64a, the second interior control valve 64b, the one or more additional interior control valve 64n, the permeate control valves 70a, 70b, 70n, and the retentate control valves 72a, 72b, 72n.

In some instances, the controller 100 includes programming to adjust the total surface area (e.g., increase or decrease) of the one or more membrane drying stage(s) 46 using the one or more interior control devices (e.g., 64a, 64b, 64n, 70a, 70b, 70n, 72a, 72b, and 72n). The total surface area of the one or more membrane drying stage(s) 46 may be adjusted manually by closing and opening the one or more interior control devices, for example, by a user. Alternatively or additionally, the total surface area of the one or more membrane drying stage(s) 46 may be adjusted in response to measured values obtained from the one or more measuring devices (e.g., 34a-34h) to maintain a selected set-point in one or more of the process or product streams, such as a desired pressure, a desired component composition, and/or a desired flow rate. For systems that include more than one membrane drying stage, adjusting the ratio of the total surface area of a first membrane drying stage to the total surface area of a second membrane drying stage may enable, for example, the use of smaller or larger capacity compressors to be used by influencing the amount of recycled sweep.

As another example, the controller 100 is programmed to acquire one or more process parameters in the system 10 using the one or more measuring devices (e.g., 34a-34h) and adjust the total surface area of the one or more membrane drying stage(s) 46 by closing (e.g., to decrease surface area) or opening (e.g., to increase surface area) the valves of the first gas separation membrane unit 60a, the second gas separation membrane unit 60b, and/or the one or more additional gas separation membrane units 60n.

For example, if the flow rate of the second gas transport device discharge stream 44 to the membrane drying stage(s) 46 decreases, which may be measured using a measuring device 34a located in the washed gas stream 32, a measuring device 34b located in the first gas transport device discharge stream 42, or a measuring device 34c located in the second gas transport device discharge stream 44, it may be advantageous to reduce the total surface area of the membrane drying stage(s) 46 to maximize efficiency and to maintain selected set-points during operation. This may be done, for example, by closing the one or more additional interior control valve 64n, the one or more additional permeate valve 70n, and the one or more additional retentate valve 72n in response to the change in flow rate of the second gas transport device discharge stream 44 to the membrane drying stage(s) 46.

Alternatively, if the flow rate of the second gas transport device discharge stream 44 to the membrane drying stage(s) 46 increases, it may be advantageous to increase the total surface area of the membrane drying stage(s) 46. This may be done, for example, by opening the one or more additional inlet interior valve 64n, the one or more additional permeate valve 70n, and the one or more additional retentate valve 72n in response to the change in flow rate of the second gas transport device discharge stream 44 to the membrane drying stage(s) 46.

## Methods for Separating or Drying a Gas Mixture

A method for separating or drying a gas mixture is also provided. The method for separating a gas mixture comprises the steps of: (a) providing a gas mixture comprising carbon dioxide and water; (b) feeding the gas mixture to a membrane dryer to remove water from the gas mixture and form a dehydrated gas stream. In some instances, the dehydrated gas stream contains less than 10 ppm water. In some instances, the dehydrated gas stream is imparted with a dewpoint of no more than -20°C to no less than -75°C (or no more than about -20°C to no less than about - 75°C). In some examples, the gas mixture comprises water (e.g., water vapor) and at least about 0.01% by weight carbon dioxide, or at least about 0.1% by weight carbon dioxide, or at least about 1% by weight carbon dioxide, or at least about 5% by weight carbon dioxide, or at least about 10% by weight carbon dioxide, or at least about 20% by weight carbon dioxide, or at least about 30% by weight carbon dioxide, or at least about 40% by weight carbon dioxide, or at least about 50% by weight carbon dioxide. In some aspects, the gas mixture comprises at least about 50% by weight of carbon dioxide and water vapor. In certain instances, the gas mixture comprises water (e.g., water vapor) and carbon dioxide in an amount of at least about 0.01% by weight, or at least about 0.1% by weight, or at least about 1% by weight, or at least about 5% by weight, or at least about 10% by weight, or at least about 20% by weight, or at least about 30% by weight, or at least about 40% by weight, or at least about 50% by weight. In some instances, the gas mixture may comprise water (e.g., water vapor) and greater than 50% by weight carbon dioxide. In some cases, the gas mixture may comprise water (e.g., water vapor) and carbon dioxide in an amount of greater than 50% by weight. In some cases, the gas mixture may comprise a majority of carbon dioxide. In some aspects, the gas mixture comprises at least about 1 ppm by volume of water (e.g., water vapor).

In some instances, the membrane dryer may comprise a first plurality of membranes having a first total membrane surface area.

In some instances, the method further may comprise a step of cooling, condensing, and/or liquefying the dehydrated gas stream to form a liquified stream of (purified) carbon dioxide.

In some instances, the membrane dryer may comprise at least one membrane designed to allow water vapor in the process or product streams to selectively pass through the membrane, as permeate, while retaining the other components of the process streams, as retentate. In some instances, the at least one membrane may have a permeate side and a retentate side, where water diffuses through the membrane and a sweep stream flows along the permeate side of the membrane. Thus, the membrane dryer may generate a retentate stream imparted with a moisture content lower than the moisture content of the stream provided to the membrane dryer, i.e., dehydrated product streams or dehydrated gas streams.

In some instances, the one or more gas separation membrane(s) of the membrane dryer may be provided in the form of a polymeric membrane that is highly selective for water. In some instances, the one or more gas separation membrane(s) of the membrane dryer may be imparted with a $H_2O/CO_2$ selectivity value of about 10 to about 2000. For example, the $H_2O/CO_2$ selectivity value may be imparted with a value greater than about 10, or about 10 to about 2000, or about 10 to about 1500, or about 10 to about 1000, or about 10 to about 750, or about 10 to about 500, or about 10 to about 200, or about 10 to about 100. As an additional example, the one or more gas separation membrane(s) of the membrane dryer is imparted with a $H_2O/CO_2$ selectivity value greater than 10, or 10 to 2000, or 10 to 1500, or 10 to 1000, or 10 to 750, or 10 to 500, or 10 to 200, or 10 to 100. It is to be understood that the $H_2O/CO_2$ selectivity value may be imparted with a value between any of the minimum or maximum values described above.

For example, the membrane(s) may comprise polydimethylsiloxane. In some such instances, the membrane(s) may be provided in the form of a hollow-fiber membrane. In some instances, the membrane dryer(s) is provided in the form of a Fluidpro® membrane-based dryer sold by Pentair, Inc. Suitable membrane-based dryers also include PRISM® membrane dryers sold by Air Products (Allentown, PA), membrane dryers available from the Donaldson Company, Inc. (Leuven, Belgium), membrane dryers available from Atlas Copco (Rock Hill, SC), and membrane dryers available from Parker (Haverhill, MA).

In some instances, the membrane dryer may comprise a first plurality of membranes having a first total membrane surface area.

In some instances, the method for separating a gas mixture further may comprise a step of compressing, cooling, and/or purifying the dehydrated gas stream to form a liquified stream of purified carbon dioxide.

In some instances, the dehydrated gas stream generated by the method may be imparted with a concentration of water that is less than the concentration of water of the gas mixture. In some instances, the dehydrated gas stream may be imparted with a concentration of water ranging from about 0 ppm to about 50 ppm (or 0 ppm to 50 ppm), or about 0 ppm to about 25 ppm (or 0 ppm to 25 ppm). For example, the dehydrated gas stream may be imparted with a concentration of water that is no more than 50 ppm, or no more than 25 ppm, or no more than 20 ppm, or no more than 15 ppm, or no more than 14 ppm, or no more than 13 ppm, or no more than 12 ppm, or no more than 11 ppm, or no more than 10 ppm, or no more than 9 ppm, or no more than 8 ppm, or no more than 7 ppm, or no more than 6 ppm, or no more than 5 ppm, or no more than 4 ppm, or no more than 3 ppm, or no more than 2 ppm, or no more than 1 ppm, or no more than 0.1 ppm, or no more than 0.05 ppm, or no more than 0.01 ppm, or no more than 0.001 ppm. As an additional example, the dehydrated gas stream may be imparted with a concentration of water that is no more than about 50 ppm, or no more than about 25 ppm, or no more than about 20 ppm, or no more than about 15 ppm, or no more than about 14 ppm, or no more than about 13 ppm, or no more than about 12 ppm, or no more than about 11 ppm, or no more than about 10 ppm, or no more than about 9 ppm, or no more than about 8 ppm, or no more than about 7 ppm, or no more than about 6 ppm, or no more than about 5 ppm, or no more than about 4 ppm, or no more than about 3 ppm, or no more than about 2 ppm, or no more than about 1 ppm, or no more than about 0.1 ppm, or no more than about 0.05 ppm, or no more than about 0.01 ppm, or no more than about 0.001 ppm.

In some instances, the dehydrated gas stream generated by the method may be imparted with a dewpoint of no more than about -20°C to no less than about -75°C, or no more than about -30°C to no less than about -75°C. For example, the dehydrated gas stream may be imparted with a dewpoint of no less than -75°C, or no less than -70°C, or no less than -65°C, or no less than -60°C, or no less than -55°C, or no less than -50°C, or no less than -45°C, or no less than -40°C, or no less than -35°C, or no less than -30°C. As an additional example, the dehydrated gas stream may be imparted with a dewpoint of no less than about -75°C, or no less than about - 70°C, or no less than about -65°C, or no less than about -60°C, or no less than about -55°C, or no less than about -50°C, or no less than about -45°C, or no less than about -40°C, or no less than about -35°C, or no less than about -30°C. In some instances, the dehydrated gas stream may be imparted with a dewpoint of no less than -45°C (or no less than about -45°C).

In some instances, the dehydrated gas stream may be imparted with a pressure. For example, the pressure of the dehydrated gas stream may be imparted with a value of 1 bar to 20 bar. For example, the pressure may be imparted with a value of at least 2 bar, or at least 3 bar, or at least 4 bar, or at least 5 bar, or at least 6 bar, or at least 7 bar, or at least 8 bar, or at least 9 bar, or at least 10 bar, or at least 11 bar, or at least 12 bar, or at least 13 bar, or at least 14 bar, or at least 15 bar, or at least 16 bar, or at least 17 bar, or at least 18 bar, or at least 19 bar, or at least 20 bar. As an additional example, the pressure of the dehydrated gas stream may be imparted with a value of at least about 2 bar, or at least about 3 bar, or at least about 4 bar, or at least about 5 bar, or at least about 6 bar, or at least about 7 bar, or at least about 8 bar, or at least about 9 bar, or at least about 10 bar, or at least about 11 bar, or at least about 12 bar, or at least about 13 bar, or at least about 14 bar, or at least about 15 bar, or at least about 16 bar, or at least about 17 bar, or at least about 18 bar, or at least about 19 bar, or at least about 20 bar.

Advantageously, the method may allow for a reduction in the total amount of energy required to operate the system, as the use of the membrane dryer(s), which may utilize off-gas from a downstream unit as sweep gas, may eliminate the need for a dryer unit (e.g., based on semi-continuous temperature swing adsorption). This may also reduce the overall footprint of the system, as compared to other gas separation systems. For example, the use of the membrane dryer(s) may eliminate the need for a dryer unit, which may require regeneration or reactivation (e.g., by thermally induced desorption), to remove moisture from the stream provided to the membrane dryer(s).

As would be appreciated by one having skill in the art, the above-described method may include fewer steps or additional steps than those described herein. In addition, any of the steps of the above-described method may be repeated more than once or omitted. Furthermore, the above-described method may be carried out using any of the systems described herein with reference to FIGS. 1-4. Thus, the parameters of the above-described method (e.g., the pressure of the dehydrated gas stream, the concentration of water in the dehydrated gas stream, the $H_2O/CO_2$ selectivity value of the one or more membranes of the gas drying module) may be imparted with any of the values described with reference to FIGS. 1-4.

## Examples

The following examples set forth, in detail, ways in which the system 10 separates a gas mixture generated during fermentation. These examples will enable one of skill in the art to more readily understand the principles of the disclosure herein. The following examples are presented by way of illustration and are not meant to be limiting in any way.

### Example 1

Table 1 presents simulation data for Example 1, which is an example process of separating the carbon dioxide-containing gas mixture 14 using the system 10, as depicted in FIG. 4. The results of the simulation are shown in Table 1 below.

**Table 1**

| Drawing Reference Number | 44 | 50 | 52 | 48 |
|---|---|---|---|---|
| Stream Name | third gas transport device discharge stream | dehydrated gas stream | sweep stream | hydrated sweep stream |
| Temperature (°C) | 15.3 | 15.3 | 7.0 | 6.5 |
| Pressure (bar(g)) | 17.3 | 17.3 | 0.20 | 0.20 |
| Mass Flow Rate (kg/h) | 1670.8 | 1669.9 | 168.3 | 169.2 |

(continued)

| Component (mole %) | | | | |
|---|---|---|---|---|
| Water | 0.12 | 0.000043 | 0.000002 | 1.14 |
| Carbon Dioxide | 98.9 | 99.0 | 90.4 | 89.4 |
| Nitrogen | 0.80 | 0.80 | 7.70 | 7.61 |
| Oxygen | 0.20 | 0.20 | 1.92 | 1.90 |

As shown in Table 1, and referring to the components described with reference to FIG. 1, the dehydrated gas stream 50 has a decreased water content (0.000043 mol %, i.e., 0.43 ppm(v)), as compared to the water content (0.12 mol %, i.e., 1200 ppm(v)) of the second gas transport device discharge stream 44 that is fed into the process gas drying module 46. The process gas drying module 46 removes water from the second gas transport device discharge stream 44. The dehydrated gas stream 50 may then be fed into the carbon dioxide liquefaction unit 54 to compress and cool the dehydrated gas stream 50 and liquefy the dehydrated gas stream 50 to create a product stream 56 (e.g., a liquid carbon dioxide product stream).

The present disclosure has described one or more preferred instances, and it should be appreciated that many equivalents, alternatives, variations, and modifications, aside from those expressly stated, are possible and within the scope of the invention. For example, the structure, arrangement, and elements of the system described herein include alternative design choices and serve the purpose of adapting the system to specific needs, such as specific input compositions or pressures, or specific output purity or yield, for example.

**Claims**

1.   A system for separating water vapor from a gas mixture, the system comprising:

   a source of a carbon dioxide-containing gas mixture, wherein the carbon dioxide-containing gas mixture comprises at least about 1 ppm by volume water vapor; and
   a process gas drying unit comprising a membrane in fluid communication with the source of the carbon dioxide-containing gas mixture, the process gas drying unit designed to separate the water vapor from the carbon dioxide-containing gas mixture to generate a dehydrated gas from the carbon dioxide-containing gas mixture.

2.   The system of claim 1 further comprising a carbon dioxide recovery unit including a liquefaction unit designed to produce liquefied carbon dioxide or a compressor unit designed to produce supercritical carbon dioxide.

3.   The system of claim 2, wherein the liquefaction unit includes at least one of a condenser, a stripper, and a reboiler.

4.   The system of claim 1 further comprising a carbon dioxide recovery unit designed to generate a purified liquid carbon dioxide product and an off-gas, wherein the off-gas is provided to the process gas drying unit as a sweep stream.

5.   The system as in any one of claims 1 to 4, wherein the carbon dioxide-containing gas mixture comprises at least about 100 ppm by volume carbon dioxide.

6.   The system of claim 1 further comprising:

   a carbon dioxide recovery unit in fluid communication with the process gas drying unit;
   a valve in fluid communication with the process gas drying unit and the carbon dioxide recovery unit;
   a measuring device designed to measure a parameter of the dehydrated gas to determine a measured value; and
   a controller in electrical communication with the valve and the measuring device, wherein the controller is designed to maintain or adjust a position of the valve in response to the measured value.

7.   The system of claim 6, wherein the parameter is selected from the group consisting of a pressure value, a temperature value, a flow rate, a composition value, a viscosity value, a humidity value, a moisture content value, a dewpoint value, a density value, and combinations thereof.

8.   The system as in any one of claims 1 to 7, wherein the dehydrated gas is imparted with a dewpoint of no more than -20°C to no less than -75°C.

9. The system as in any one of claims 1-8 further comprising:

a foam separator designed to receive the carbon dioxide-containing gas mixture; and
a foam trap in fluid communication with the foam separator and the process gas drying unit,
wherein the foam separator and the foam trap are designed to produce a substantially foam-free fermentation gas mixture.

10. The system of claim 9 further comprising a gas washer in fluid communication with the foam separator and the foam trap, wherein the gas washer is designed to remove water-soluble impurities from the substantially foam-free fermentation gas mixture.

11. The system as in any one of claims 1 to 10 further comprising at least one gas transport device in fluid communication with the process gas drying unit, wherein the at least one gas transport device is provided upstream of the process gas drying unit.

12. The system as in any one of claims 1 to 11, wherein the dehydrated gas contains less than 10 ppm water by volume.

13. A method for separating a gas mixture, the method comprising:

providing a gas mixture comprising carbon dioxide and water from a fermentation process;
feeding the gas mixture to a membrane dryer;
removing water from the gas mixture; and
forming a dehydrated gas stream, wherein the dehydrated gas stream is imparted with a dewpoint of no more than -20°C.

14. The method of claim 13 further comprising:

providing the dehydrated gas stream to a liquefaction unit that generates a purified liquid carbon dioxide product and an off-gas; and
providing the off-gas to the membrane dryer as a sweep gas.

15. The method as in claim 13 or 14, wherein the fermentation process produces a food product selected from the group consisting of beer, wine, distilled spirits, ciders, and sparkling sodas.

FIG. 1

FIG. 2

FIG. 3

FIG. 4

## EUROPEAN SEARCH REPORT

Europäisches Patentamt
European Patent Office
Office européen des brevets

**Application Number**

EP 25 20 6067

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 496 732 B2 (CULP CHARLES H [US]; CLARIDGE DAVID E [US]; TEXAS A & M UNIV SYS [US]) 30 July 2013 (2013-07-30) | 1,5-8, 11-13 | INV. B01D53/22 B01D53/26 |
| Y | * figure 1 * | 1-15 | C01B32/50 |
| X | JP 2009 172463 A (NIPPON KAGAKU KIKAI SEIZO) 6 August 2009 (2009-08-06) | 1,5-8, 11-13 | |
| Y | * figure 2 * * paragraphs [0008], [0038] - [0041] * | 1-15 | |
| X | WO 2009/126607 A2 (INNOSEPRA LLC [US]; JAIN RAVI [US]) 15 October 2009 (2009-10-15) | 1,5-8, 11-13 | |
| Y | * figure 2B * * page 9, line 24 - page 10, line 12 * | 1-15 | |
| X | JP 2014 091766 A (UBE INDUSTRIES) 19 May 2014 (2014-05-19) | 1,5-8, 11-13 | |
| Y | * figure 1 * * paragraph [0020] * | 1-15 | |
| Y | WO 2018/148611 A1 (WOODS TAYLOR [US]) 16 August 2018 (2018-08-16) * figure 1 * | 2-4,14, 15 | TECHNICAL FIELDS SEARCHED (IPC) B01D C01B |
| Y | US 2016/003532 A1 (YOUNG ANDREW C [US] ET AL) 7 January 2016 (2016-01-07) * figures 3, 5 * * paragraphs [0072], [0095] - [0102] * | 1-15 | |
| Y | US 5 843 209 A (RAY RODERICK J [US] ET AL) 1 December 1998 (1998-12-01) * figure 6 * * column 2, line 5 - line 35 * | 4,14 | |

The present search report has been drawn up for all claims

| Place of search | Date of completion of the search | Examiner |
|---|---|---|
| Munich | 12 February 2026 | Pöhlmann, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 20 6067

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | | Publication date | Patent family member(s) | | Publication date |
|---|---|---|---|---|---|
| US 8496732 | B2 | 30-07-2013 | BR | 112013011866 A2 | 23-08-2016 |
| | | | CN | 103282723 A | 04-09-2013 |
| | | | EP | 2638331 A2 | 18-09-2013 |
| | | | ES | 2676516 T3 | 20-07-2018 |
| | | | HK | 1188280 A1 | 25-04-2014 |
| | | | JP | 5651247 B2 | 07-01-2015 |
| | | | JP | 2014501898 A | 23-01-2014 |
| | | | KR | 20130103574 A | 23-09-2013 |
| | | | MX | 347879 B | 16-05-2017 |
| | | | US | 2012118147 A1 | 17-05-2012 |
| | | | US | 2012118148 A1 | 17-05-2012 |
| | | | US | 2012118155 A1 | 17-05-2012 |
| | | | US | 2014144318 A1 | 29-05-2014 |
| | | | US | 2019176084 A1 | 13-06-2019 |
| | | | WO | 2012065134 A2 | 18-05-2012 |
| | | | WO | 2012065138 A2 | 18-05-2012 |
| | | | WO | 2012065141 A2 | 18-05-2012 |
| JP 2009172463 | A | 06-08-2009 | NONE | | |
| WO 2009126607 | A2 | 15-10-2009 | AU | 2009233890 A1 | 15-10-2009 |
| | | | BR | PI0911793 A2 | 02-05-2017 |
| | | | CA | 2726383 A1 | 15-10-2009 |
| | | | CN | 102083512 A | 01-06-2011 |
| | | | EP | 2427255 A2 | 14-03-2012 |
| | | | JP | 2012522627 A | 27-09-2012 |
| | | | KR | 20110000656 A | 04-01-2011 |
| | | | WO | 2009126607 A2 | 15-10-2009 |
| | | | ZA | 201007593 B | 25-09-2013 |
| JP 2014091766 | A | 19-05-2014 | NONE | | |
| WO 2018148611 | A1 | 16-08-2018 | NONE | | |
| US 2016003532 | A1 | 07-01-2016 | NONE | | |
| US 5843209 | A | 01-12-1998 | AU | 724534 B2 | 21-09-2000 |
| | | | BR | 9704365 A | 23-03-1999 |
| | | | CA | 2212835 A1 | 14-02-1998 |
| | | | EP | 0824034 A2 | 18-02-1998 |
| | | | ID | 19176 A | 28-06-1998 |
| | | | IL | 121538 A | 31-12-1999 |
| | | | JP | H10113531 A | 06-05-1998 |
| | | | MY | 117684 A | 31-07-2004 |
| | | | TW | 450830 B | 21-08-2001 |
| | | | US | 5843209 A | 01-12-1998 |

EPO FORM P0459

For more details about this annex : see Official Journal of the European Patent Office, No. 12/82

page 1 of 2

24

# EP 4 721 842 A1

## ANNEX TO THE EUROPEAN SEARCH REPORT
## ON EUROPEAN PATENT APPLICATION NO.

EP 25 20 6067

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | Publication date | Patent family member(s) | Publication date |
|---|---|---|---|
| | | ZA 977245 B | 16-02-1998 |

For more details about this annex : see Official Journal of the European Patent Office, No. 12/82

page 2 of 2

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63702123